Europäisches Patentamt

European Patent Office

Office européen des brevets

(11) Publication number: 0 229 837
A1

## EUROPEAN PATENT APPLICATION

published in accordance with Art. 158(3) EPC

(21) Application number: 85903043.9

(22) Date of filing: 14.06.85

Data of the international application taken as a basis:

(86) International application number:
PCT/JP 85/00336

(87) International publication number:
WO 86/07452 (18.12.86 86/27)

(51) Int. Cl.⁴: G 01 L 1/00

(43) Date of publication of application: 29.07.87
Bulletin 87/31

(84) Designated Contracting States: DE FR GB

(71) Applicant: HITACHI CONSTRUCTION MACHINERY CO.,
LTD., 6-2, Ohtemachi-2-chome, Chiyoda-ku
Tokyo 100 (JP)

(72) Inventor: MIYAJIMA, Takeshi, 1801 Banchi, Oaza
Skayori, Makabemachi, Makabe-gun, Ibaraki 300-44 (JP)
Inventor: OGURA, Yukio, 1343-251, Arakawa-Hongo,
Amimachi, Inashiki-gun, Ibaraki 300-11 (JP)
Inventor: SUZUKI, Yoshiaki, 9-401, 1828 Banchi, Niihari,
Chiyodamura, Niihari-gun, Ibaraki 315 (JP)
Inventor: TOMITA, Sadahisa, 70-1, Himeko 1-chome,
Mito-shi, Ibaraki 311-41 (JP)

(74) Representative: Waxweiler, Jean et al, OFFICE
DENNEMEYER S.à.r.l. P.O. Box 1502,
L-1015 Luxembourg (LU)

(54) METHOD OF MEASURING CONTACT STRESS IN CONTACT SURFACE BETWEEN SOLIDS BY ULTRASONIC WAVE.

(57) A method of measuring the contact stress in a contact surface (1) between solids of the same or different kinds by utilizing an ultrasonic wave, consisting of the steps of applying a surface wave to the contact surface (1) from the side of one end thereof so as to introduce the surface wave to the side of the other end of the contact surface (1) therethrough, and determining the contact stress on the basis of the sound pressure of this passed wave as an evaluation index, whereby the contact stress in the contact surface between the parts or members of a machine, which are in the static and dynamic state, can be measured non-destructively, easily, quantitatively, and very accurately by a real-time operation without being influenced by the shape, sizes and roughness of a surface to be flaw-detected, contact surface and bottom surface.

**TITLE MODIFIED**
 see front page

METHOD OF MEASURING CONTACT STRESS AT
CONTACTING SURFACES OF ABUTTING SOLID
MASSES BY UTILIZING ULTRASONIC WAVE

BACKGROUND OF THE INVENTION

a)  Field of the Invention:

The present invention relates to a method of measuring, by utilizing an ultrasound, the contact stress at the contacting surfaces of abutting solid masses of either a same kind or different kinds.

The term "contacting surfaces of abutting solid masses" herein used means the contacting surfaces between parts or members constituting a machine or an architectural structure used in various industrial fields. The contacting surfaces of abutting solid masses include those stationary as well as those which are in the state of undergoing a relative displacement such as by sliding.  Also, the term "solid mass" herein referred to does not point only to a mass of a metal but also as a mass of a non-metal such as glass, ceramic, concrete, synthetic resin, rubber, wood, etc., through which ultrasound waves can be transmitted.

More specifically, the above-mentioned contact stresses at the contacting surfaces of abutting solid masses include: the contact stress at the fitting surfaces produced from interference fitting due, for example, to shrinkage fitting, expansion fitting or press-fitting; the contact stress at the die-fastened surfaces on a press; the contact stress at bolt-fastened surfaces; the contact stress at the meshing surfaces of toothed wheels; the contact stress at screwed surfaces; the contact stress between a spline or key and a part or member contacting it; the contact stress between a valve and a valve seat; the contact stress between a cylinder bore and a piston ring; and other contact stress at the contacting surfaces between parts or members constituting various apparatuses. The present invention relates to the method of measuring these contact stresses.

b) Related Art Statement:

In utilizing the interference fitting technique to which the present invention is applicable, knowing the contact stress at the contacting surfaces of two combined abutting parts or members is indispensable for studying the function as well as the mechanical strength of a machine. Heretofore, however, a method of directly and quantitatively measuring the contact stress at the contacting surfaces of combined parts has not ever been established.

For the above-mentioned purposes, various methods of measuring the contact stresses h..ve been studied. Generally, however, there have been known only the method of indirectly measuring the contact stress by making use of photoelasticity, and also the method of directly measuring the contact stress by utilizing a pressure sensitive sheet (disclosed in the "Non-destructive Inspection", vol. 27, 11th issue, Nov. 1978, pp. 751-754). These methods have been used though they have problems yet to solve as will be described later. In the method of measuring by photoelasticity, a model of such contacting surface should be prepared in advance with a synthetic resin which differs in material from an object of which the contact stress is to be measured actually, and the object be evaluated for contact stress thereof based on the fringe patterns formed photoelastically at the contacting portions of the model. So this method needs the identity in nature or property between the object to be measured and the model. Practically, however, no identity can be assured because of the differences in material, dimensions, configuration, etc. between them, so that the results of measurement will be delicately different one from another measurement also the measurement is affected by the machining precision of the contacting surface of the model, causing a problem that the optical property is so changed that the fringe order becomes difficult to determine. Also since the method of measuring the static contact stress at planer contacting surfaces such bolt-fastened ones using the pressure-sensitive sheet requires the contacting surfaces should be fastened with the pressure-sensitive sheet inserted between them in advance, the state and property of the contacting surfaces are likely to change in some or other way. In this method, the contacting surfaces are unfastened and separated for observing any changes in color patttern of the pressure-sensitive sheet, thereby measuring the contact stress at the contacting surfaces. Because of the above-mentioned change in property of the contacting surfaces, it is not possible to measure the contact stress with a high accuracy and also quantitatively. Furthermore, because of the strength of the pressure-sensitive sheet, the measurement of contact stress is limited to a range of about 5 to 700 $kgf/cm^2$ and this method is not usable for measurement of the contact stress at the contacting surfaces such as shrinkage-fitted, expansion-fitted or press-fitted ones. The conventional methods having been described above permit to measure only the static contact stress, but they are disadvantageous in that they cannot be used to measure the contact stress at the contacting surfaces which displace relatively to each other, namely, the so-called dynamic contact stress.

To overcome the above-mentioned drawbacks of the conventional techniques, the utilization of ultrasound has been studied to measure the contact stress at such contacting surfaces while maintaining the state and property of the contacting surfaces as they are (as disclosed in the "Non-destructive Inspection", vol. 25, 10th issue, Dec. 1976, pp. 669-675).

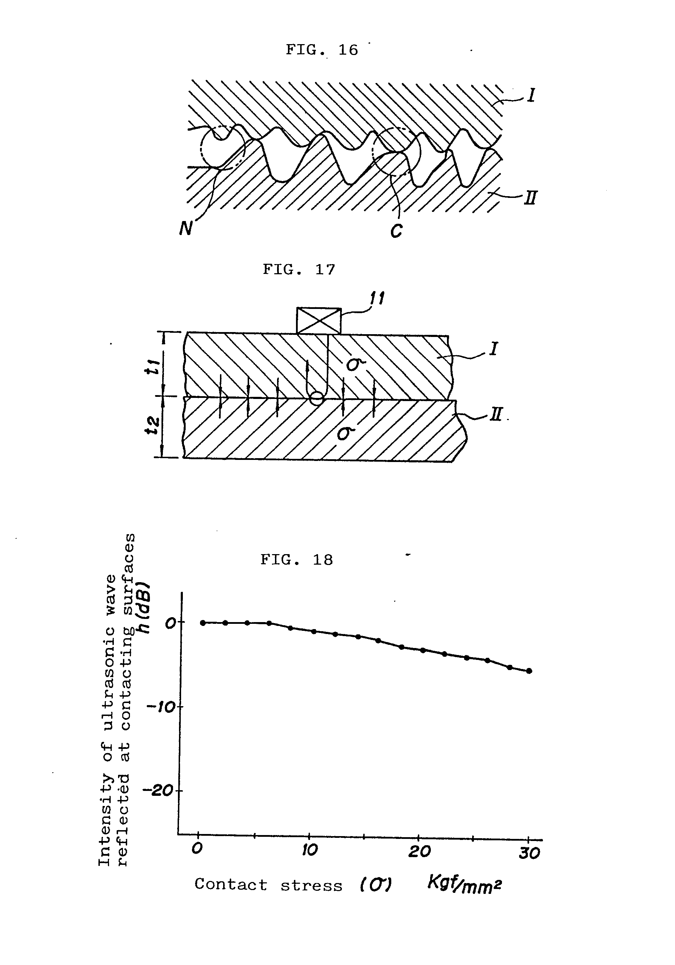

This method is intended to measure only the intensity of the reflected wave of an ultrasound from the contacting surfaces of two abutting metal masses, thereby measuring the contact stress at the contacting surfaces. The level at which the technique of metal surface treatment currently is not so high that any true planer surface or true curved surface can be worked which is not rough or wavy. Ordinary contacting surfaces of abutting solid masses are inevitably composed of two rough or wavy surfaces. The contact between such surfaces is schematically shown as microscopically enlarged in Figure 16. As seen, the contacting surfaces have a true contact portion C where the two metal masses are in direct contact with each other, and a contact portion N where the two metal masses are not in direct contact with each other and there exists air between the masses. When an ultrasound is directed toward the contacting surfaces, the wider the area of the true contact portion C, the smaller the intensity of the reflected wave is. This method uses this tendency to measure the intensity of the reflected wave, thereby determining the contact stress at the contacting surfaces based on the measured value.

More specifically, in the method of meausuring the contact stress at the contacting surfaces of abutting solid masses by utilizing ultrasound, the relation between the contact stress and the intensity of reflected wave of the ultrasound is preliminarily determined using reference test piece, and the measured intensity of the reflected waves is quantified taking the previously determined relation as calibration curve. However, there are inevitably differences in configuration, surface roughness, etc. and also a difference in application of the ultrasonic probe between the surface of the reference test piece on which an ultrasonic probe is placed and the surface of an object under measurement on which the another probe is placed. Such differences have a direct influence on the results of measurement, which will be so nonuniform that the quantitative evaluation becomes difficult to do. So it has been reported that "at the present stage, the accuracy of measurement cannot be said good enough to put the present method to practice". In fact, the results of the studies having been done by the Inventors of the present invention proved that as graphically shown in Figure 18, the change in intensity of the reflected wave with increase of the contact stress is very small, namely, on the order of about $0.2$ dB/kgf/mm$^2$, which is a large obstacle against correct quantitative evaluation of the contact stress value based on the intensity of the reflected wave. Also this method of ultrasonic measurement is proved to have various shortcomings in practice. The graphs in Figure 18 shows the values measured by this method of measuring with ultrasound shown in Figure 17. Namely, the test piece is composed of a solid mass I of t1 = 30 mm in thickness and another solid mass II of t2 = 20 mm, which are put into contact with each other; both masses are made of S35C class (JIS G4051 "Carbon Steel for Machine Structure Use", but containing 0.32 - 0.38 % of carbon). The values are those measured with a probe 11 of 5 MHz in frequency applied to the surface of te solid mass I, an ultrasound (longitudinal wave) directed nearly perpendicularly to the contacting surfaces and by plotting the intensity h (in dB) of the ultrasound wave reflected at the contacting surfaces and which are received by the probe 11 while changing the contact stress at the contacting surfaces. It should be noted that the intensity h of the reflected wave is a measurement of the echo height displayed on the CRT of an ultrasonic flaw detector of pulse echo type with A scope display (will be referred to as "ultrasonic flaw detector" hereinafter).

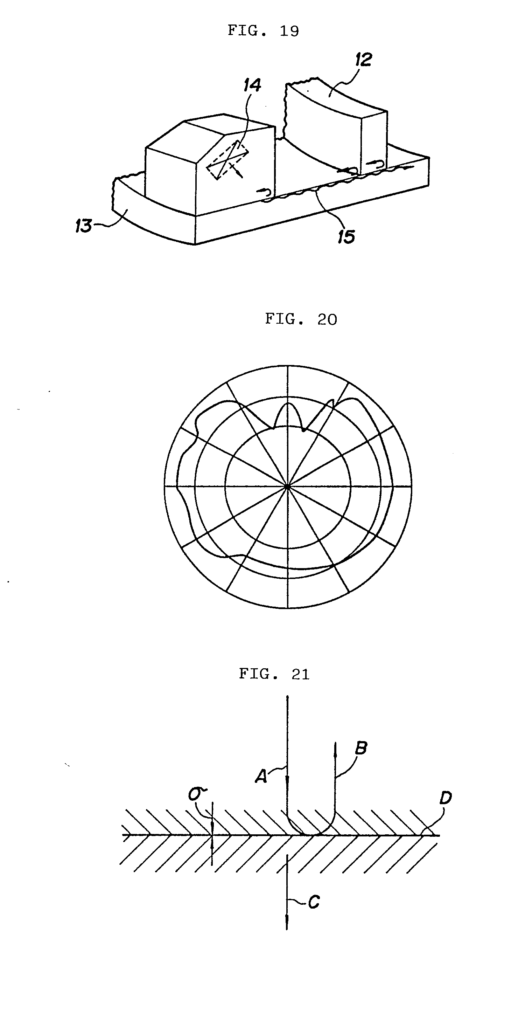

The above-mentioned report reads a method of utilizing a surface wave to measure the degree of the contact between the piston ring and cylinder bore and also that for this purpose, an ultrasonic contact pattern recognition apparatus has been developed to detemine the quality of the piston ring by knowing qualitatively the contact stress from the condition of the contact. Figure 19 shows the method of contact pattern measurement, and Figure 20 shows an example of this measurement, illustrating the measured peak values of reflected waves in the form of polar coordinate. In Figure 19, the reference numeral 12 indicates a piston ring, 12 a cylinder bore, 14 a transducer within the probe, and 15 a surface wave. As in the above-mentioned method of measuring by utilizing the intensity h of the reflected wave, this method of ultrasonic measurement is not expectable for any high accuracy of measurement and also for any quantitative evaluation.

As having been described in the foregoing, the conventional methods have many problems yet to solve, and the solutions have been expected for them. The Inventors and Applicant of the present invention proposed a novel and improved method by which the contact stress at the contacting surfaces of abutbuting solid masses can be evaluated quantitatively and with a high accuracy by utilizing an ultrasound (PCT/JP82/00087).

This method features that an ultrasound is directed toward the contacting surfaces of two abutting solid masses, and the sound pressure of the wave reflected at the contacting surfaces and that of the wave transmitted through the surfaces are compared with each other, thereby measuring the contact stress at the contacting surfaces. More particularly, since the contacting surfaces of the abutting solid masses include a true contact portion C where the two solid masses are in direct contact with each other and a contact portion N where there is an air between the opposing surfaces, as will be apparent from the description having been made with reference to Figure 16. As the contact stress becomes larger, the protrusions of the true contact portion C will be collapsed and plastically deformed, with the result that the true contact portion C will increase in area while the contact portion N decrease. Namely, the sound pressure of the reflected wave of the ultrasound directed toward the contacting surfaces of the abutting solid masses decreases gradually while the sound pressure of the transmitted wave increases correspondingly. The ratio between these sound pressures tends to increase as the contact stress increases. This tendency can be explained using the following formulas (11) and (12) derived from Figure 21 showing the principle of this method:

$$\frac{B}{A} = \frac{1}{f(\sigma)} \quad \cdots\cdots\cdots\cdots\cdots\cdots \quad (11)$$

$$\frac{C}{A} = g(\sigma) \quad \cdots\cdots\cdots\cdots\cdots\cdots \quad (12)$$

where A : Sound pressure of incident wave

B : Sound pressure of reflected wave from contacting surface D

C : Sound pressure of transmitted wave

f($\sigma$) and g($\sigma$) : Functions having a tendency to increase as the contact stress ($\sigma$) becomes greater

The ratio between the formulas (11) and (12) is given as follows:

$$\frac{B/A}{C/A} = \frac{B}{C} = \frac{1}{f(\sigma) \cdot g(\sigma)} \quad \cdots\cdots\cdots\cdots\cdots \quad (13)$$

As apparent from the formula (13), the sound pressure (A) of the incident wave is offset, so that the measurement is not directly affected by the sound pressure (A), and as the ratio B/C is expressed as a function of the product of f($\sigma$) and f($\sigma$), the value of 1/f($\sigma$)·g($\sigma$) changing along with the variation of the contact stress ($\sigma$), namely, the amount of change of the ratio B/C, is greater, which makes it possible to evaluate the contact stress quantitatively and with a high accuracy as compared with the conventional method in which the ratio B/A is taken as an index of evaluation.

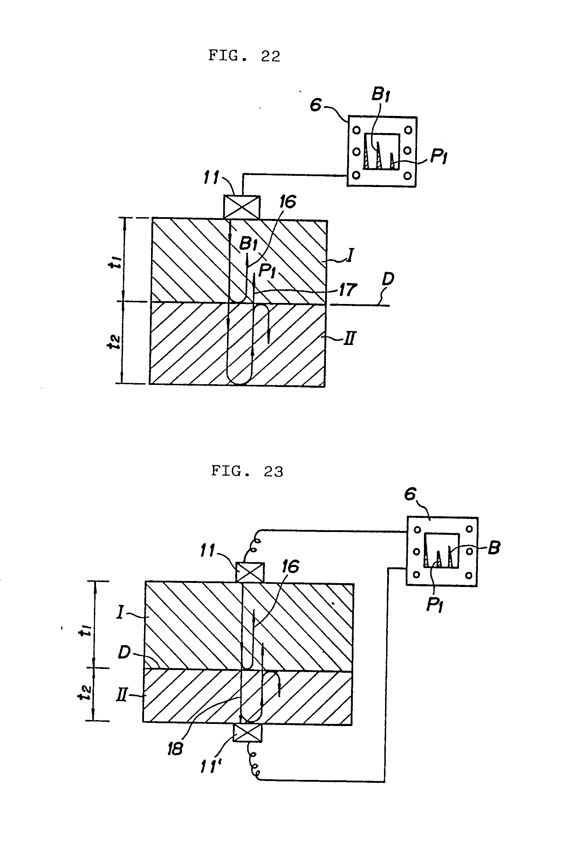

The methods of comparing the sound pressure of the reflected wave of an ultrasound from the contacting surfaces with that of the transmitted wave generally include those shown in Figures 22 to 25 and the respective liquid immersion methods for them. That is, the method shown in Figure 22 is a typical embodiment of the above-mentioned method. In this method, an ultrasound (longitudinal wave) is directed from a vertical probe 11 applied to the outer surface of a solid mass I toward the contacting surfaces of the abutting solid masses I and II, the first reflected wave 16 of the ultrasound from the contacting surface D and the second reflected wave 17 being the portion of the ultrasound transmitted through the contacting surface D, reflected at the bottom surface of the solid mass II and then transmitted through the contacting surface D again are received by the vertical probe 11. The echo B1 of the first reflected wave 16 and that P1 of the second reflected wave 17 are nearly simultaneously displayed on the CRT of an ultrasonic flaw detector 6 to which the probe 11 is connected, at the respective positions of beam pass lengths T1, T2 from the pulsed ultrasound emitting point and which correspond to the thickness t1 and t2 of the solid masses I and II. Thus the difference $\Delta h$ (in dB) in height between the echoes B1 and P1 is determined and a contact stress ($\sigma$) is determined from the rectilinear correlation of a large gradient between the difference $\Delta h$ and contact stress ($\sigma$).

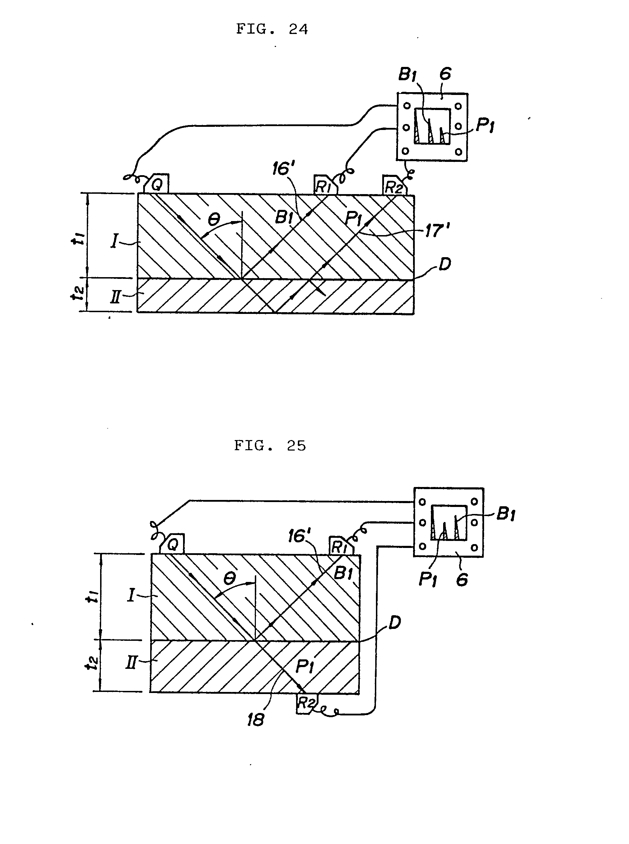

The method shown in Figure 23 is a same one as that shown in Figure 22, provided that the wave 18 reaching the bottom surface of the solid mass II after being transmitted through the contacting surface D is received by another vertical probe 11' applied on the bottom surface of the solid mass II. In the methods shown in Figures 24 and 25, an oblique probe is used. In the method in Figure 24, an ultrasound (transverse wave) is directed toward the contacting surface D of the soild masses I and II from an oblique probe Q applied on the outer surface of the solid mass I obliquely through an angle of $\theta$ with respect to the contacting surface D. The first reflected wave 16' being a portion of the ultrasound reflected at the contacting surface D, and the second reflected wave 17' being a portion of the ultrasound transmitted through the contacting surface D, reflected at the bottom surface of the solid mass II and then passes through the contacting surface D are received by separate oblique probes R1 and R2, respectively, and the echo B1 of the first reflected wave 16' and echo P1 of the second reflected wave 17' are displayed on the CRT of the ultrasonic flaw detector 6 to which the probes are connected, as in the method shown in Figure 22 to determine the contact stress ($\sigma$). The method shown in Figure 25 is a same one as in Figure 24, provided that the wave 18' reaching the bottom surface of the soild mass II after being propagated over the contacting surface D, not the second reflected wave 17', is received by the oblique probe R2 applied on the bottom surface of the solid mass II. As mentioned above, each of the methods shown in Figures 22 to 25 can be adapted to the liquid immersion method to measure the contact stress ($\sigma$).

Indeed, the above-mentioned methods of measuring the contact stress overcomes the drawbacks of the conventional methods and pemit to evaluate the contact stress quantitatively, highly accurately and quickly without any change in state of contact between the abuttin solid masses and properties of the solid masses in contact with each other. Furthermore, by adopting the methods explained in Figures 22 to 25 and the liquid-immersion methods for them, the contact stress at the contacting surfaces of abutting solid masses can be effectively measured without being affected by the configuration and roughness of the surfaces under detection for any flaw and on which the probe is applied. However, these methods of contact-stress measurement have still some problems: Namely, (i) In any of the methods in which the vertica probe is used, methods in which the oblique probe is used and the liquid-immersion methods, the sound pressure of the reflected wave of ultrasound from the contacting surfaces is compared with that of the transmitted wave through the contacting surfaces. So, all these methods require the detection of the sound pressure of the reflected and transmitted waves of ultrasound. Therefore, in the method in which the vertical probe is used, the required first reflected wave 16 from the contacting surface D cannot be detected unless the ultrasound is directed toward the contacting surface D nearly perpendicularly from the surface under flaw-detection and on which the probe is applied. Also in case the second reflected wave 17 is required, this wave cannot be detected unless the transmitted wave is further propagated and reflected nearly perpendicularly to the bottom surface. On the contrary, in the method shown in Figure 23 and featuring that the transmitted wave 18 through the contacting surface D is detected if the vertical probe 11' applied to the bottom surface is not disposed opposing another vertical probe 11 applied to the surface under flaw-detection and with the contacting surface D located between these probes. Consequently, these methods cannot be used to measure the contact stress of such abutting solid masses as have a surface under flaw-detection and contacting surface D of which the configuration, dimensions and roughness are such that the ultrasound cannot be directed from the surface under flaw-detection nearly perpendicularly toward the contacting surfaces, and also as have a surface under flaw-detection, contacting surface D and bottom surface of which the configuration, dimensions and roughness are such that the vertical probe 11' applied on the bottom surface and the vertical probe 11 applied on the surface under flaw-detection canno be disposed with the contacting surface D placed between them. In the method in which the an oblique probe is used, an ultrasound is directed obliquely toward the contacting surface D, and the reflected wave 16' from the contacting surface D and the transmitted waves 17' and 18' through the contacting surface D go out obliquely. So in case the contact stress cannot be measured in the vertical direction, for example, in case there exists any obstacle right above the measuring point or in case the configuration, dimensions and roughness of the surface under flaw-detection are such that the vertical probe cannot be applied, this method can be effectively used. However, similarly to the method in which the vertical probe is used, this method does not permit to measure the contact stress of such solid masses as have a surface under flaw-detection, contacting surface D and bottom surface of which the configuration, dimensions and roughness are not such that the ultrasound directed obliquely goes out obliquely as reflected wave and transmitted wave through the contacting surfaces in a direction in which they can be detected. The methods in which the vertical probe or oblique probe is used are a direct-contact method in which the probe is directly applied to the solid mass under measurement. However, by adopting the liquid-immersion method for these methods, the measurement is not affected by the manner of probe application and the configuration, dimensions and surface roughness of the location where the probe is applied but can be done stably since the probe is not directly applied to the object under measurement. As in the direct-contact method, however, this liquid-immersion method requires that the solid masses under measurement should have the contacting surfaces and bottom surface of which the configuration, dimensions and roughness are such that the ultrasound can be directed nearly perpendicularly toward the contacting surfaces and the ultrasound thus incident upon the contacting surfaces can go out as reflected wave and transmitted wave in the directions in which the waves can be detected. Under these required conditions, the sound pressures of the reflected wave and transmitted wave can be detected to measure the contact stress. (ii) Even in case both the solid masses (I) and (II) have a such smooth surface under flaw-detection, contacting surfaces and bottom surface that any of the direct-contact method and liquid-immersion method can be adopted, if the solid masses (I) and (II) are equal in thickness to each other, the echoes of the first and second reflected waves appear in a same position on the CRT of the ultrasonic flaw detector, so that the difference $\Delta h$ in echo height cannot be determined. So, the contact stress cannot be measured. (iii) In case it is necessary to measure the contact stress at the entire contacting surfaces, the direct-contact method and immersion method are selectively used depending upon the configuration, dimensions and surface roughness of the surface under flaw-detection, contacting surfaces and bottom surface of the object under measurement, and without this selective adoption of the methods, some of the objects cannot be measured for contact stress. For example, in case an obstacle like a wall exsists right above the measuring point of the object under measurement, the oblique probe should preferably be used, while the vertical probe should be used at the rest of the object where no obstacle exists. In case the object has at any part thereof a protrusion which is long and of a complicate outer configuration, the liquid-immersion method should preferably be adopted, but because of the protrusion, the object cannot be freely turned inside the liquid bath so that the rest of the object that cannot be measured can only be measured by the direct-contact method as the case may be. Namely, the measurement is affected and limited by the configuration of the object.

SUMMARY OF THE INVENTION

The present invention has the primary object to overcome the drawbacks of the conventional method of measuring the contact stress at the contacting surfaces of the abutting solid masses, by providing a method of measuring, using ultrasound, the contact stress at the contacting surfaces of abutting solid masses of a same kinds or different kinds and which permits to evaluate the contact stress quantitatively, highly accurately and without changing the contact state and properties of the contacting surfaces under measurement.

The present invention has another object to provide a method of measuring the contact stress at the contacting surfaces of abutting solid masses and which can measure the contact stress very quickly and in a real-time manner.

The present invention has a yet another object to provide a method of measuring the contact stress at the contacting surfaces of the abutting solid masses and which always permits a correct and quantitative evaluation of the contact stress without being affected by the configuration, dimensions and roughness of the surface under flaw-detection, contacting surfaces and bottom surface of the object.

The present invention is characterized in that a surface wave is directed toward the contacting surfaces of two abutting solid masses and the sound pressure of the portion of the surface wave that is transmitted through the contacting surfaces is utilized to measure the contact stress at the contacting surfaces.

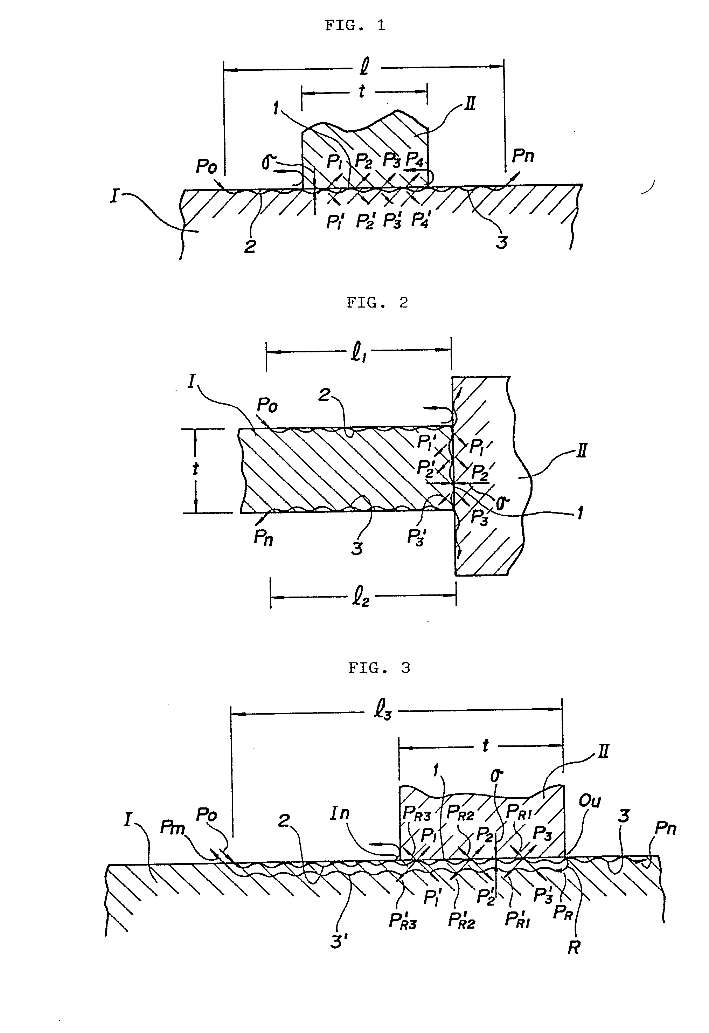

The present invention utilizes the properties of the contacting surfaces which will be described below. Namely, the contacting surfaces of the solid masses include, as having been described with reference to Figure 16, a true contact portion C where the solid masses are in direct contact with each other and a contact portion N where an intervening air exists between the opposite surfaces. So, as the contact stress becomes larger, the protrusions of the true contact portion C are collapsed and plastically deformed and the true contact portion C increases while the contact portion N decreases. This means that of the surface wave directed toward the contacting surfaces of abutting solid masses, the wave penetrating into the solid masses through the true contact portion C has the sound pressure increased gradually while the sound pressure of the wave transmitted through the true contact portion C and contact portion N is gradually decreased. It is thus known that the difference between the increase and decrease tends to increase as the contact stress becomes larger. For further clarity of the above-mentioned characteristic of the present invention, a description will be made in further detail with reference to Figures 1 to 3 showing the principles of the present invention.

Referring to Figure 1, it is shown that a surface wave is directed under a sound pressure P0 toward the contacting surfac 1 of abutting solid masses I and II from an arbitrary point on the non-contacting surface of the solid mass I in a plane where also the contacting surface 1 lies. The incident surface wave 2 is propagated over the non-contacting surface of the solid mass I and reaches the beginning end (entry) of the contacting surface 1. The incident surface wave 2 having arrived at the contacting surface 1 is partially reflected at the beginning end and the other portion is penetrated gradually into the solid masses I and II correspondingly to the area ratio between the true contact portion C and contact portion N, as in the description made with reference to Figure 16, by the time it has been transmitted through the contacting surface 1. At the same time, the energy of the incident surface wave 2 is attenuated for the extent of the penetration. This penetration and attenuation being repeated, the sound pressure is decreased from the initial value P0 thereof to P1, P1', P2, P2', P3, P3', P4, P4', ... in this order. The transmitted wave 3 through the contacting surface 1 is partially reflected at the trailing end (exit) of the contacting surface 1, while the rest of the wave 3 goes out under a sound pressure Pn from a point on the non-contacting surface of the solid mass I that is a value ℓ away from the incident point in a plane where also the contacting surface 1 exists. As evident from the relation of this process with contact stress σ, since the true contact portion C is increased in area as the contact stress $\sigma$ is larger, the wave peretrating into the solid masses I and II increases, while the energy of the transmitted wave 3 is attenuated and also the sound pressure Pn is decreased in proportion. This relation can be expressed as follows:

$$P_n = \alpha \cdot \frac{1}{\sigma \cdot t \cdot \sqrt{\ell}} \qquad \cdots\cdots\cdots\cdots\cdots\cdots \quad (1)$$

where t : Length of contacting surface 1

$\ell$ : Distance from incident point of surface wave to the point where the surface wave goes out after transmission through the contacting surface 1

$\alpha$ : Constant of proportion, determined by Poisson ratio of solid masses, frequency of surface wave, etc.

In case the solid masses are of different kinds, the Posisson ratio of the one of the solid masses that is softer, namely, of which the elastic modulus is smaller, is to be adopted. The formula (1) is reformed as follows:

$$\sigma = \alpha \cdot \frac{1}{P_n \cdot t \cdot \sqrt{\ell}} \qquad \cdots\cdots\cdots\cdots\cdots\cdots \quad (2)$$

where the values of t, $\ell$ and $\alpha$ are the known values determined by the materials and dimensions of the object under measurement and the measuring conditions of the surface wave probe used and the sound pressure Pn of the transmitted wave 3 is a value which is easily detectable by displaying it on the CRT or otherwise. In effect, just by detecting the sound pressure Pn of the transmitted wave 3, it is possible to determine the contact pressure at the contacting surfaces of the abutting solid masses quantitatively, highly accurately and very easily from the high-accuracy correlation between the sound pressure and contact stress σ which will be described later.

Figure 1 shows the principle of the present invention, on which the incident and outgoing points of the surface wave are on the non-contacting surface in a plane where also the contacting surface 1 lies. Figure 2 shows also the principle of the present invention on which the surface wave is directed from on a non-contacting surface contiguous to the contacting surface 1 but which is not in the plane where the latter exsists and it is made to go out at the non-contacting surface not in the plane where the contacting surface 1 exists. In Figure 2, the like numerals in Figure 1 indicate the like elements. The solid mass I is a flat plate of which the end face abuts the solid mass II to form the contacting surface 1. The incident surface wave 2 directed under a sound pressure P0 toward the contacting surface 1 from a point on the solid mass I which is ℓ1 off the contacting surface 1 is propagated over a distance ℓ1 on the surface of the solid mass I and reaches the beginning end (entry) of the contacting surface 1. This incident surface wave 2 is partially reflected at the beginning end and the rest is propagated in a different direction. The surface wave 2 thus changed in the propagating direction is partially propagated to the non-contacting surface of the solid mass II while the other portion is propagated through the contacting surface 1. As having been explained with refer- ence to Figure 1, the surface wave is gradually attenuated while penetarting into the solid masses I and II before it is transmitted through the contacting surface 1. While the penetration and attenuation are being repeated, the sound pressure is successively decreased from the initial value P0 thereof to P1, P1', P2, P2', P3, P3', ... in this order. When the surface wave passes over the length t of the contacting surface 1, a portion of the wave is reflected, and another portion is propagated as it is through the non-contacting surface of the solid mass, and the rest is propagated in a different direction in which it becomes a transmitted wave 3 which is propagated on the opposite sid to the incident side of the solid mass I. The transmitted wave 3 goes out under a sound pressure Pn at a point on the solid mass I that is $\ell2$ off the contacting surface 1. As apparent from the relation with this process with the contact stress $\sigma$, as having been explained with reference to Figure 1, the energy of the transmitted wave 3 is attenuated with the increase of the contact stress $\sigma$ and also the sound pressure Pn is decreased in proportion. This relation can be expressed as follows like the formula (1):

$$P_n = \alpha \cdot \frac{1}{\sigma \cdot t \cdot \sqrt{(\ell_1 + t + \ell_2)}} \quad \cdots\cdots\cdots\cdots \quad (3)$$

Also the formula (3) can be reformed as follows:

$$\sigma = \alpha \cdot \frac{1}{P_n \cdot t \cdot \sqrt{(\ell_1 + t + \ell_2)}} \quad \cdots\cdots\cdots\cdots \quad (4)$$

If $\ell1 = \ell2$, the term $(\ell1 + t + \ell2)$ of the formulas becomes $(2 1 + t)$. As the comparison between the formulas (2) and (4) shows, both the terms ($\ell 1 + t + \ell 2$) and (2 $\ell 1 + t$) are a distance of propagation from the point upon which the surface wave is incident to the point at which the wave goes out after transmittion through the contacting surface 1. Similarly to the principle of measurement shown in Figure 1, also the principle in Figure 2 permits to determine the values t, $\ell 1$, $\ell 2$ and $\alpha$ depending upon the material and dimensions of the object under measurement and also the measuring conditions of the surface wave probe, so that the contact stress at the contacting surfaces of the solid masses can be determined very easily, quantitatively and highly accurately simply by detecting the sound pressure Pn of the transmitted wave 3.

While the principles shown in Figures 1 and 2 are such that a surface wave is directed toward the contacting surfaces from one side thereof and transmitted through the contacting surfaces, thereby evaluating the sound pressure of the transmitted wave, the principle of measurement shown in Figure 3 is such that a surface wave is directed toward the contacting surfaces from one side thereof, the incident surface wave reaches the beginning end (entry) of the contacting surfaces, is propagated from there and transmitted through the contacting surfaces, the surface wave having reached the trailing end (exit) of the contacting surfaces is reflected at the trailing end, and the wave transmitted again through the contacting surfaces goes out at the first point of incidence. On this principle, the sound pressure of the outgoing surface wave is taken as index of evaluation. In Figure 3, the like numerals in Figures 1 and 2 indicate the like elements. An incident surface wave is directed under a sound pressure P0 toward the contacting surface 1 from an arbitrary point on the non-contacting surface of the solid mass I in a plane where also the contacting surface 1 exists. As on the principle having been described with reference to Figure 1, the incident surface wave 2 is propagated on the non-contacting surface of the solid mass I and arrives at the beginning end In of the contacting surface 1 of a length t. The incident surface wave 2 having reached the beginning end In is partially reflected there while the other portion of the wave passes, by propagation, through the contacting surface 1 and arrives at the trailing end Ou of the contacting surface 1 of a length t. As having been described in connection with Figure 1, the surface wave penetrates gradually into the solid masses I an II and is attenuated simultaneously depending upon the area ratio between the true contact portion and contact portion with an intervening air between the opposing surfaces before having passed through the contacting surface 1. Thus, the sound pressure of the wave is gradually decreased from the initial value P0 to P1, P1', P2, P2', P3, P3', ... in this order. The incident surface wave 2 having reached the trailing end Ou of the contacting surface 1 is partially transmitted as it is through the trailing end Ou and becomes a transmitted wave 3 of a sound pressure Pn' and which will be gradually attenuated and finally disappear, while the rest of the wave is reflected at the trailing end Ou to become a reflected wave R of a sound pressure PR. This reflected wave R is transmitted through the contacting surface 1 again by reverse propagation and arrives at the beginning end In of the contacting surface 1. As having been explained in the foregoing, the penetration and attenuation through the solid masses I and II being repeated before the wave is retransmitted through the contacting surface 1 again, the sound pressure is gradually decreased from the value PR at the reflection to PR1, PR1', PR2, PR2', PR3, PR3', ... The reflected wave R having arrived at the beginning end In is transmitted as it is through the beginning end In to be a retransmitted wave 3' and goes out under a sound pressure Pm from the incidence point of the initial surface wave on the non-contacting surface of the solid mass I. As in the principle having been described with reference to Figures 1 and 2, the larger the contact stress $\sigma$, the more the energy of the transmitted wave is attenuated and the smaller the sound pressure becomes in proportion. On the principle in Figure 3, however, since the retransmitted wave 3' resulted from the reciprocal transmission of the incident surface wave through the contacting surface 1 is evaluated, the attenuation of surface wave and decrease of the sound wave are nearly double those in the principle shown in Figures 1 and 2. This can be expressed by the following formula:

$$P_m = \alpha \cdot \frac{1}{\sigma \cdot 2 t \cdot \sqrt{2 \ell_3}} \qquad \cdots\cdots\cdots\cdots\cdots \quad (5)$$

where t : Length of contacting surface 1

$\ell 3$ : Distance from incidence point (also outgoing point) of surface wave to trailing end Ou of contacting surface 1

α: Constant of proportion depending upon the solid mass as in the formula (1).

The formula (5) is reformed as follows:

$$\sigma = \alpha \cdot \frac{1}{P_m \cdot 2\,t \cdot \sqrt{2\,\ell_3}} \quad \cdots\cdots\cdots\cdots\cdots \quad (6)$$

The values t, $\ell$3 and α in the formula (6) are the known values determined by the measuring conditions as in the description made in connection with the formulas (2) and (4). Also the sound pressure Pm of the retransmitted wave 3' can be easily detected. Therefore, it is apparent from the formula (6), that since the measurement is affected about 2 times by the change of the value of the contact stress as compared with the principles on which the sound pressure Pn of the transmitted wave is taken as index of evaluation as in Figures 1 and 2, it is possible to measure the contact stress at the contacting surfaces of abutting solid masses with a higher accuracy and quantitatively by detecting the sound pressure Pm of the retransmitted wave 3'.

On all the principles of meaurement having been described in the foregoing with reference to Figures 1 to 3, the contacting surface 1 is planer. However, since the surface wave is propagated along even any irregular surface, curved surfaces including a circular surface, composite surface including a curved surface and planer surface, etc., it is of course that the principles of the present invention are applicable to the contacting surfaces including any of such surfaces.

These and other objects and advantages of the present invention will be better understood from the ensuing description made by way of example with reference to the drawings.

BRIEF DESCRIPTION OF THE DRAWINGS

Figures 1 to 3 explain the principles of the method of measurement according to the present invention,

Figure 1 being an explanatory illustration of a principle on which a surface wave is directed toward the contacting surface from on the non-contacting surface in a plane where also the contacting surface exists and the wave transmitted through the contacting surfaces is utilized;

Figure 2 being a similar illustration of a principle on which the surface wave is directed toward the contacting surface from on the non-contacting surface contiguous to the contacting surface but in a plane where the contacting surface exists and the wave transmitted through the contacting surface is utilized; and

Figure 3 being a similar illustration of a principle on which a surface wave is directed toward the contacting surface from on the non-contacting surface lying in a plane extending from the contacting surface, transmitted through the contacting surface, reflected at the trailing end of the contacting surface and transmitted reversely through the contacting surface, and the retransmitted wave thus resulted is utilized;

Figures 4 to 10 explain one embodiment of the present invention based on the principle shown in Figure 1,

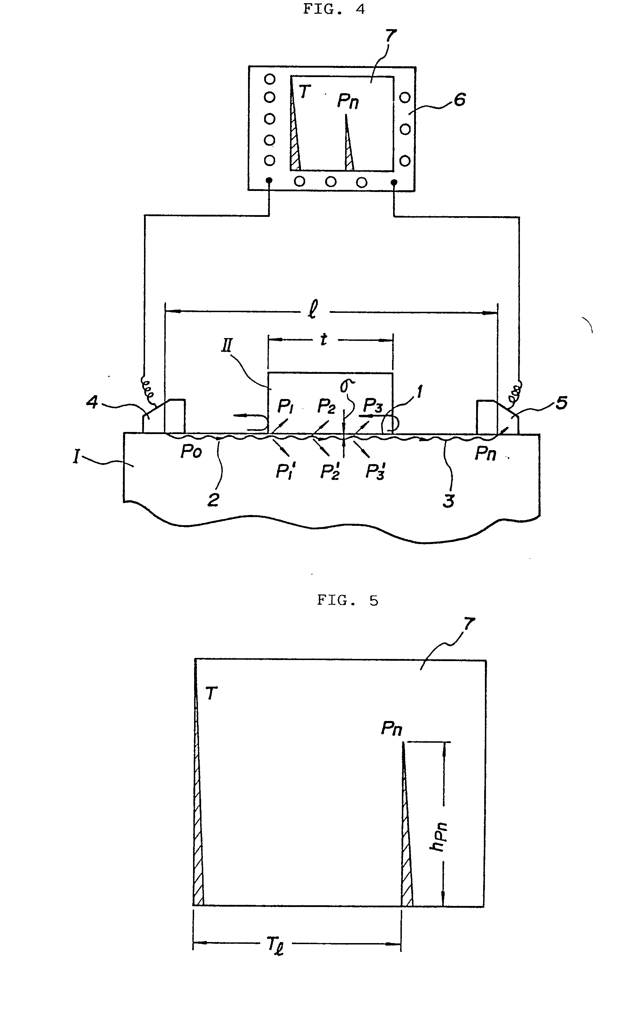

Figure 4 being a drawing for generally explaining the first embodiment;

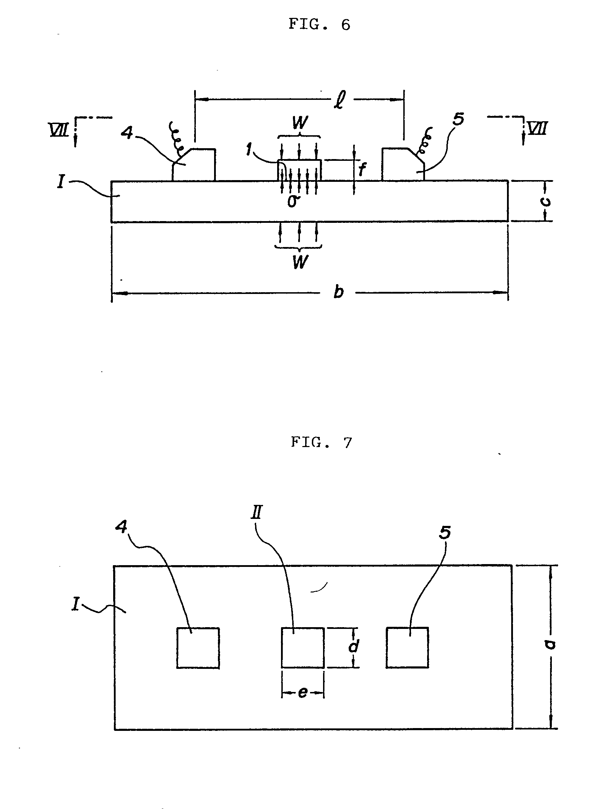

Figure 5 being a drawing showing the echo pattern on the CRT and which is obtained by the method shown in Figure 4;

Figure 6 being a side elevation for explanation of the object under measurement and the experimental procedure;

Figure 7 being a plan view taken along the line VII-VII of Figure 6;

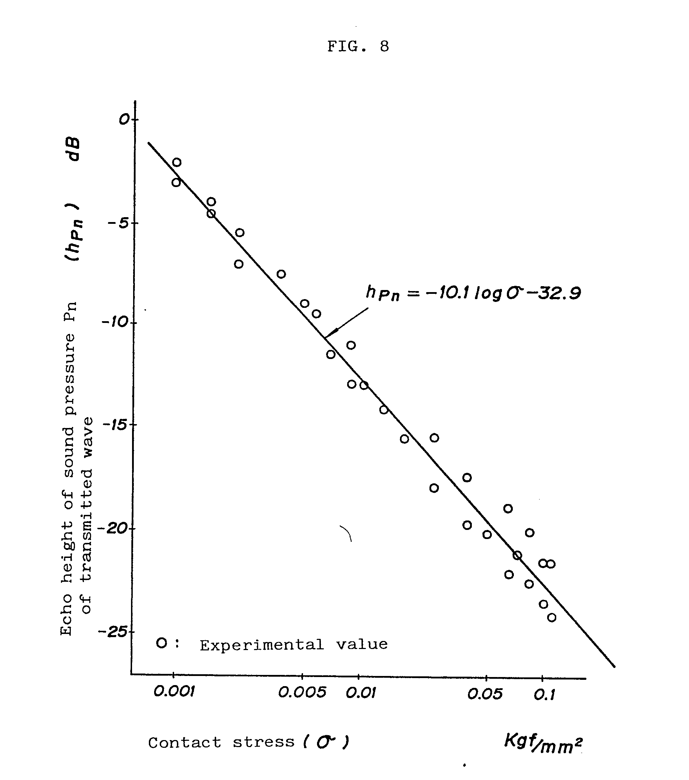

Figure 8 being a graph showing the relation between the contact stress and echo height of transmitted wave, obtained by the experiment shown in Figures 6 and 7;

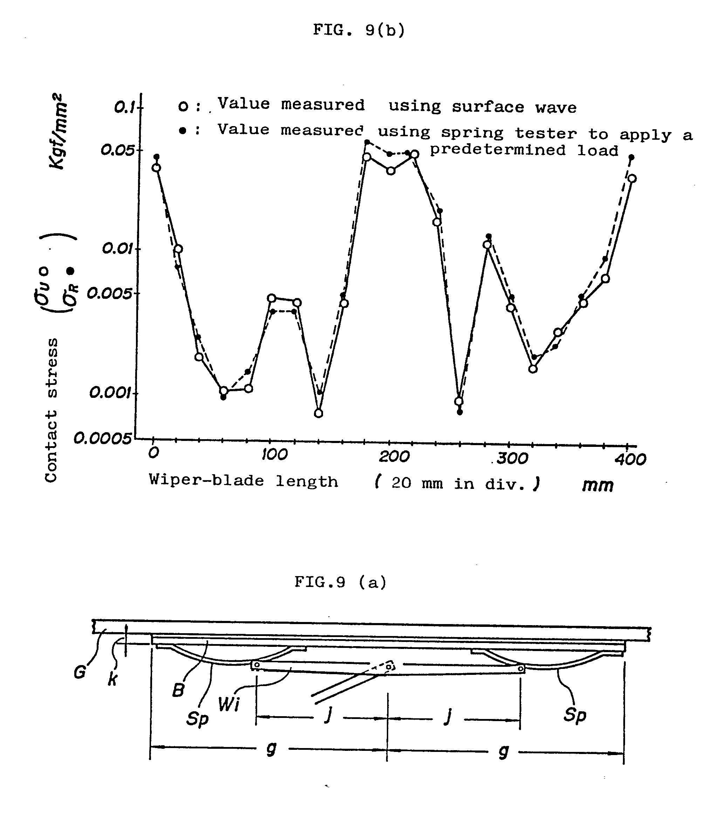

Figure 9 (a) being an explanatory drawing of the application of the method shown in Figure 4 to the actual product (wiper and front glass);

Figure 9 (b) being a graph showing the measurement result in Figure 9 (a); and

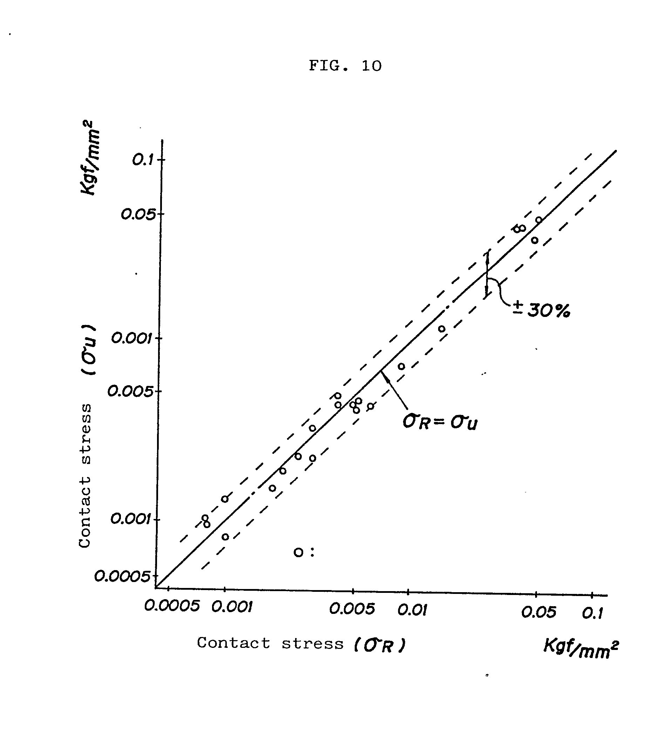

Figure 10 being a graph for explanation of the accuracy of the measurement as known from the meaurement result in Figure 9 (b) ;

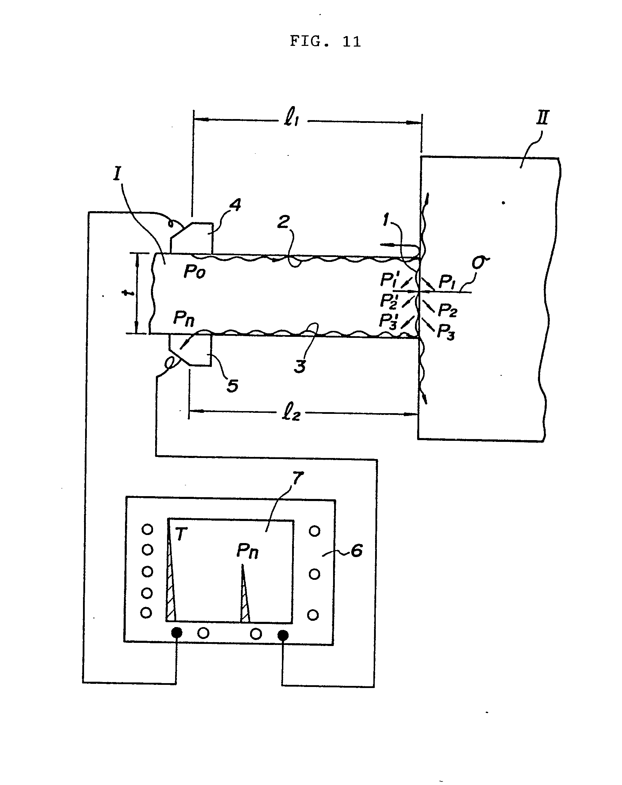

Figures 11 to 14 explain another embodiment of the present invention based on the principle shown in Figure 2; of which,

Figure 11 is a drawing for generally explaining the embodiment;

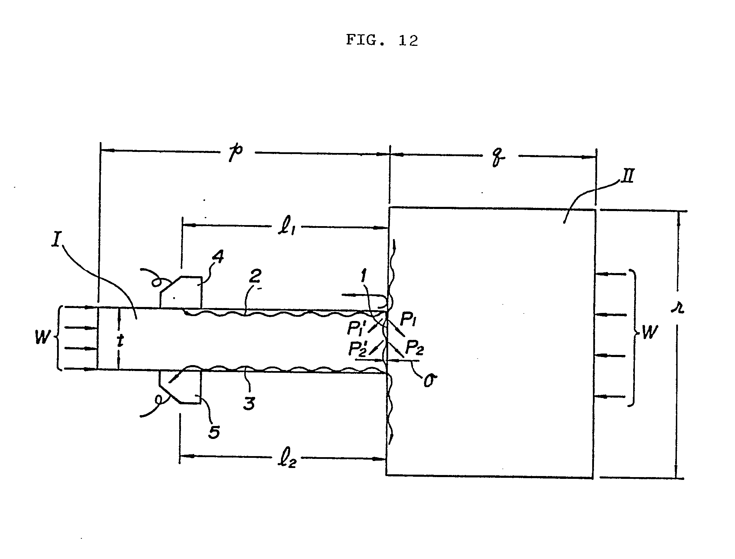

Figure 12 is a drawing explaining the object under experiment and the procedure for the experiment;

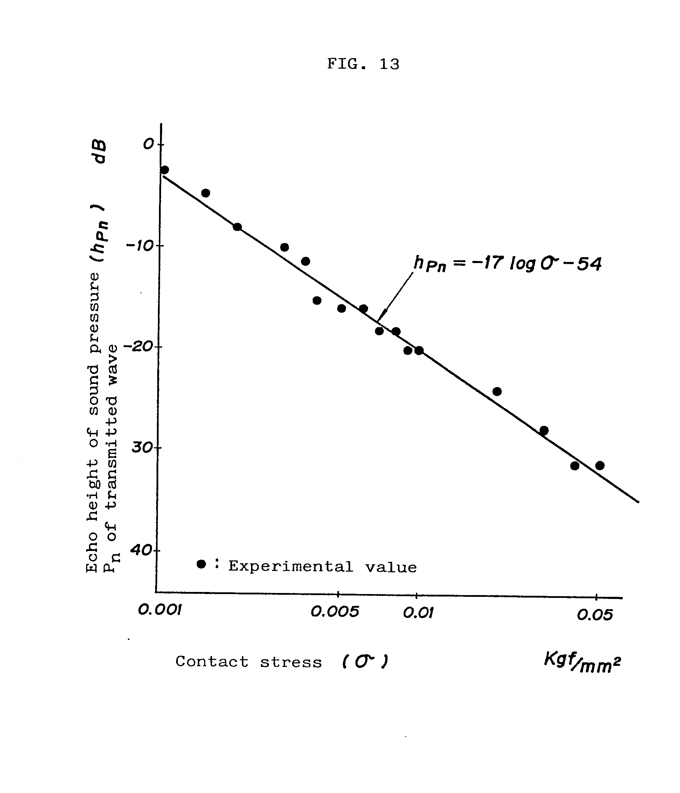

Figure 13 is a graph showing the relation between the contact stress and echo height of transmitted wave obtained by the experiment in Figure 12;

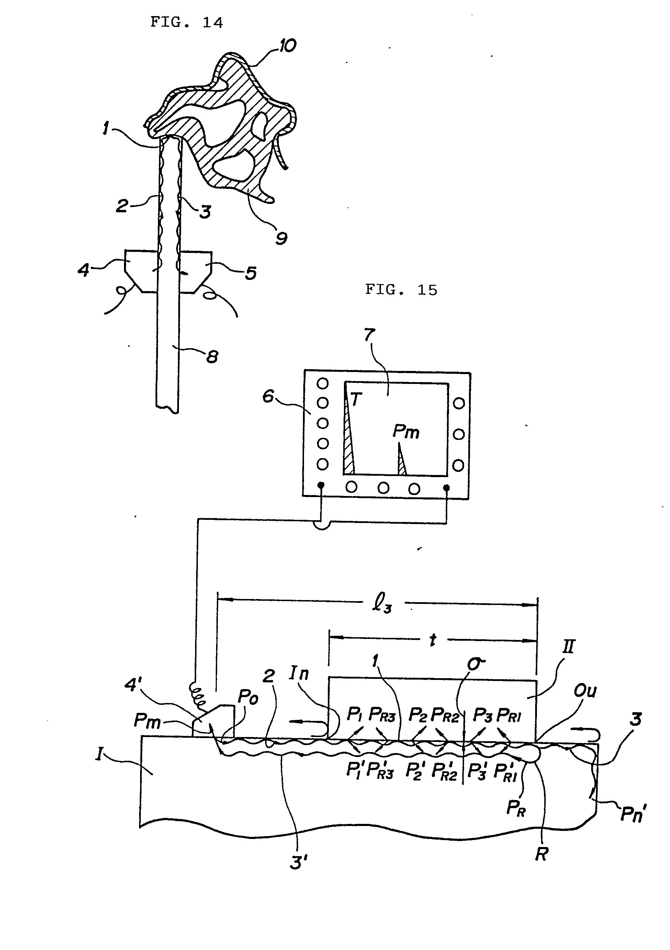

Figure 14 is an explanatory drawing showing the application of the method shown in Figure 11 to the actual products (weather stop and window glass);

Figure 15 generally explains the third embodiment of the present invention based on the principle shown in Figure 3;

Figure 16 is a schematic diagram showing the state of contact between the contacting surfaces as microscopically enlarged;

Figure 17 is an explanatory drawing of the conventional method of measuring the contact stress by utilizing the intensity of the reflected wave at the contacting surfaces;

Figure 18 is a graph showing the relation between the contact stress and intensity of reflected wave, obtained by the conventional method shown in Figure 17;

Figure 19 is an explanatory drawing showing the conventional method of measuring the contact pattern by utilizing the surface wave;

Figure 20 shows an example measurement of the contact pattern obtained by the method of measurement shown in Figure 19;

Figure 21 explains the principle of the method of measuring the contact stress by utilizing a value resulted from the comparison between the sound pressure of the ultrasonic wave reflected at the contacting surfaces and that of the wave transmitted through the contacting surfaces (as disclosed in the Application PCT/JP82/00087).

Figures 22 to 25 generally explains the application of the method shown in Figure 21; of which

Figure 22 is a drawing showing the method of measuring the contact stress using the longitudinal wave and one probe;

Figure 23 is a drawing showing the method of measuring the contact stress using the longitudinal wave and two probes;

Figure 24 is a drawing showing the method of measuring the contact stress using the transverse wave and with all the transmitting and receiving probes disposed on the wave-incidence surface under detection for any flaw; and

Figure 25 is a drawing showing the method of measuring the contact stress using the transverse wave and with a transmitted-wave receiving probe disposed on the bottom surface while another probe is disposed on the wave-incidence surface under detection for any flaw.

DETAIL DESCRIPTION OF THE PREFERRED EMBODIMENTS

The preferred embodiments of the present invention will be described in further detail with reference to the drawings. Figures 4 to 10 show the first embodiment of the present invention based on the principle having been described with reference to Figure 1.

Figure 4 explains the method of measuring the contact stress at the contacting surfaces of abutting solid masses I and II by directing a surface wave toward the contacting

surfaces of the solid masses I and II from a non-contacting surface in a plane where also the contacting surfaces exist and utilizing the sound pressure of the surface wave transmitted through the contacting surfaces. In Figure 4, the like elements in Figure 1 are indicated with the like reference numerals. The numeral 4 indicates a surface wave transmitting probe applied to the non-contacting surface of the solid mass I, and 5 a surface wave receiving probe, these probes being disposed opposite to each other with a distance $\ell$ between them. These surface wave probes 4 and 5 are connected to an ultrasonic flaw detector 6 by means of a high frequency cable. A surface wave is directed under a sound pressure P0 from the surface wave probe 4 toward the contacting surface 1. The incident surface wave 2 is propagated on the non-contacting surface of the solid mass I and reaches the beginning end (entry) of the contacting surface 1. This incident surface wave 2 is partially reflected at the beginning end, and the other portion thereof gradually penetrates into the solid masses I and II by the time it has been transmitted through the contacting surface 1 of a length t. Simultaneously, the energy of the incident surface wave 2 is attenuated for this penetration. As the surface wave 2 thus passes through the contacting surface 1, the penetration and attenuation are reapated while the sound pressure is sequentially decreased from the initial value P0 thereof to P1, P1', P2, P2', P3, P3', ... in this order. The wave 3 transmitted through the contacting surface 1 has a portion thereof reflected at the trailing end (exit) of the contacting surface 1, while the rest of the transmitted wave is received under the sound pressure Pn by the surface wave probe 5. This received wave 3 is displayed on the CRT 7 of the ultrasonic flaw detector 6, providing an echo pattern shown in Figure 5. The sound pressure of the received wave is taken along the vertical axis while the propagation time of the surface wave is along the horizontal axis. The echo Pn of the transmitted wave 3 appears, taking a height hPn in a position after lapse of a time Tℓ corresponding to a distance between the surface wave probes 4 and 5, namely, a propagation distance ℓ from the incident point to the outgoing point of the surface wave. The reference symbol T in Figure 4 indicates a transmission pulse which appears at the origin of the horizontal axis.

The height hPn of the echo Pn changes according to the ratio in area between the true contact portion C and contact portion N with intervening air shown in Figure 16 occupy in the the contacting surfaces D of the solid masses I and II. More specifically, as the contact stress becomes larger so that the area ratio of the true contact portion C with the contacting surfaces D increases, the height hPn of the echo Pn becomes low. On the contrary, as the contact stress decreases so that the ratio of the true contact portion C with the contacting surfaces D becomes small, the height hPn of the echo Pn becomes larger. However, the height hPn of the echo Pn will not always change in propotion as mentioned above depending upon the properties of the contacting surface such material, shape, dimensions, surface roughness, etc., more specifically, on the surface roughness, large or small. This is because, in case the surface roughness is extremely large, even if the contact stress increases with the result that the plastic deformation of the protrusions on both the contacting surfaces becomes larger, while the protrusions are hard to be collapsed to a sufficient extent because of their large height and pitches, and there remains a contact portion N with intervening air than expected for the increase of the load so that the contact stress will not increase uniformly at the contacting surfaces. On the contrary, however, in case the surface roughness is small, even if the plastic deformation of the protrusions at both the contacting surfaces is increased a little, the part the true contact portion C occupies is likely to increase and the contact portion N with intervening air decreases in proportion with the increase of the load and the contact stress increases uniformly at the contacting surfaces. Thus, the measurement can be done with a high accuracy. Therefore, the desirable surface roughness is about a half of the wavelength $\lambda$ with which the energy of the surface wave can be sufficiently propagated, for example, about 300 $\mu$m in case the solid masses are metallic ones. In the technique disclosed in the PCT/JP82/00087 having been discussed previously in thee BACKGROUND OF THE INVENTION, the desirable surface roughness is nearly 50 $\mu$m. So it will be apparent that the method according to the present invention permits to measure the contact stress with    being little affected by the roughness of the contacting surfaces, surface under detection for flaw and also the bottom surface.

The practical effect of the method according to the present invention has been proved by the following experiment. This will be explained with reference to Figures 6 to 8. Figures 6 and 7 show the configuration and dimensions of the object and the procedure of the experiment. Figure 7 is a view taken along the line VII-VII of Figure 6. In these Figures, the solid mass I is made of a crown glass and it has a width a of 50 mm, length b of 150 mm and thickness c of 6 mm. The solid mass II is made of a rigid rubber and it has a width d, length e and thickness f all of 10 mm. The solid mass II is put at the center of the planer solid mass I, and a load W is applied to the solid masses from above the top of the solid mass II by means of a spring tester. The force W at the back of the solid mass I is a reaction. The surface wave transmitting probe 4 and receiving probe 5 are of 5 MHz in frequency, each using a transducer dimensioned 10 mm x 10 mm. They are applied to the solid mass I as opposite to each other with a distance $\ell$ of 50 mm between them as well as with the solid mass II being between them. As the value of the load W is changed, the height hPn of the echo Pn for the contact stress at the contacting surface 1 as measured by the method shown in Figure 4 takes the value as plotted with small circles in Figure 8. The value of the contact stress $\sigma$ is a mean stress derived from the division of the load W by an area of 100 $mm^2$ of the contacting surface 1. The horizontal axis of the graph in Figure 8 indicates the logarithmic value of the contact stress σ while the vertical axis indicates the height hPn of the echo Pn in decibels. When the contact stress σ = 0, the echo height hPn is 0 dB. As seen from Figure 8, there is a very favorable rectilinear correlation between the contact stress σ and echo height hPn. The calculation of the correlation factor γ will result in a value of -0.925. The above-mentioned results of experiment can be expressed in the following form of a regression expression by using the least square method:

$$h_{P_n} = -10.1 \; \log \; \sigma - 32.9 \qquad \cdots\cdots\cdots\cdots\cdots \quad (7)$$

This is the straight line in Figure 8. The expression (7) can be reformed as follows:

$$\sigma = 10^{\dfrac{-h_{P_n} + 32.9}{10.1}} \qquad \cdots\cdots\cdots\cdots\cdots \quad (8)$$

Thus there is established between the contact stress σ and the sound pressure Pn of the transmitted wave (more specifically, the echo height hPn of the sound pressure Pn) a logarithmic rectilinear correlation as shown in Figure 8. By using this regression expression, it is possible to immediately know the contact stress σ from the sound pressure Pn of the transmitted wave.

An instance of the application of the correlation determined from the experimental results to an actual product will be explained with reference to Figures 9 and 10. Figure 9 (a) shows the actual product. The reference symbol Wi indicates an automotive wiper, and B indicates the blade of the wiper. The wipe blade B has the whole length 2g of 400 mm and a width k of 8 mm. At positions of 2j = 230 mm symmetrically from the center, the wiper blade W is forced to the front glass G with a rated working load by means of the spring member Sp of the wiper Wi. By the method having been discussed with reference to Figures 4 to 8, the sound pressure of the received surface wave is measured at the following 21 points from one end of the wiper blade B by moving the surface wave probe. The results of measurement calculated by applying the measurement values to the expression (8) are shown in Figure 9 (b). The horizontal axis indicates the whole length 2g = 400 mm of the wiper blade B and the the scale of 20-mm divisions from one end indicates the 21 measuring points. The vertical axis indicates the logarithmic value (in $kgf/mm^2$) of the contact stress $\sigma U$. As apparent from the small circles connected by solid lines, the plotted small circles are positioned nearly symmetrically with respect to the center of the wiper blade B, and the contact stress $\sigma U$ at the intermediate portion of the wiper blade B and at the portion where the blade is forced by the spring member Sp is high while the contact stresses at the other portions are very low. On the other hand, when the same object as shown in FIgure 9 (a) is measured for contact stress $\sigma R$ by applying the same load as in the above-mentioned measurement to the object by the above-mentioned spring tester, the values indicated with the black spots in Figure 9 (b) are obtained. By connecting the black spots by dash lines and comparing the curve with the solid-line curve, it is confirmed that these curves generally coincide with each other though there is a slight difference between them. Figure 10 is a graph explaining the measuring accuracy of the contact stress σU, of which the horizontal axis indicates the logarithmic value of the contact stress σR measured using the spring tester while the vertical axis indicates the logarithmic value of the contact stress σU measured by the method using the surface wave according to the present invention. These values are indicated in kgf/mm². As to the measured values at all the 21 measuring points, the following mean value x of measurement error (σU - σR), standard deviation S of the error and correlation factor γ can be determined.

$$\overline{x} = -0.0074 \ Kgf/mm^2$$

$$S = 0.0261 \ Kgf/mm^2$$

$$r = 0.989$$

All the measured values are concentrated very close to the straight line of 45° in gradient slown in Figure, which indicates the ideal value (σR - σU) but they are distributed within a range defined by the two lines of ±30% parallel to the straight line, which proves that the accuracy of the contact stress measurement by the method according to the present invention is high.

In the above-mentioned embodiment of the present invention, the contacting surface is a flat or planer one and the surface wave probe is applied to the non-contacting surface which lies in a plane where also the contacting surface lies;

- 37 -

however, it is not necessary that the non-contacting surface including the contacting surface and the plane on which the probe is applied should be in a plane in which also the contacting surface exists. The non-contacting surface may be a circumferential or waved one, and furthermore it may be a composite surface of a flat and curved surfaces. Also in the embodiment having been discussed above, both the surface wave transmitting and receiving probes are applied to one (I) of the solid masses. However, in case the solid masses have the end portions therof put in contact with or fitted on each other, for example, in case the outer circumference at the end of a cylinder is fitted on the inner circumference at the end of another cylinder of a different diameter and the contact stress at the fitting surfaces is to be measured, the surface wave transmitting probe may be applied to the outer circumference of one of the solid mass (cylinder) while the receiving probe is applied to the inner circumference of the other solid mass (cylinder). In the first embodiment having been described in the foregoing, the non-contacting surface on which the surface wave is propagated is a flat or planer one; however, any irregularity on the non-contacting surface has no influence on the measurement by the method according to the present invention. If the irregularity is nearly the wavelength of a surface wave probe (about 0.6 mm in case the object under measurement is made of, for example, iron and the frequency of a surface wave probe used is 5 MHz), the surface wave is propagated over such irregularity. If the irregularity is larger, the surface wave is propagated along the surface of the irregularity. In case the above-mentioned contacting surface and the surface on which the surface wave probe is applied are not in a same plane or in case the surface wave encounters any irregularity in the middle of propagation, the propagation distance $\ell$ of the surface wave shown in the expressions (1) and (2) is the length along the surface on which the surface wave is propagated.

Next, the second embodiment according to the principle shown in Figure 2 will be described with reference to Figures 11 to 14. In these Figures, the like numerals in Figures 2 and 4 indicate the like elements.

Figure 11 is an explanatory drawing of a method of measuring the contact stress by utilizing the sound pressure of a surface wave which is directed from on a non-contacting surface contiguous to the contacting surfaces of the abutting solid masses I and II and not lying in a plane in which the contacting surface exists toward the contacting surface and which is then transmitted through the contacting surface. In Figure 11, the surface wave transmitting probe 4 is applied to one side of the solid mass I distant $\ell_1$ from the contacting surfaces and the surface wave receiving probe 5 is applied to a position distant $\ell_2$ from the contacting surface 1 and which is at the opposite side of the solid mass I to the side on which the surface wave transmitting probe 4 is applied, these probes 4 and 5 being thus opposite to each other for the surface wave from the probe 4 to be receivable by the probe 5.

The surface wave probes 4 and 5 are connected to the ultrasonic flaw detector 6 by means of a high frequency cable. When a surface wave is directed under a sound pressure P0 from the surface wave probe 4 toward the contacting surface 1, the incident surface wave 2 is propagated over a distance $\ell 1$ on the surface of the solid mass I and arrives at the beginning end (entry) of a length t of the contacting surface 1. The incident surface wave 2 having thus arrived there is partially reflected at the beginning end, and the other portion of the wave has the direction thereof changed through 90 degrees. A direction-changed portion of the wave is propagated to the contacting surface of the solid mass II while the other portion is propagated on the contacting surface 1. At the trailing end (exit) of a length t of the contacting surface 1, the wave is patially reflected and propagated as it is on the surface of the solid mass II, while the rest has the direction thereof changed through 90 degrees and becomes a transmitted wave 3 which will be propagated over a distance $\ell 2$ on the surface of the solid mass I and received under a sound pressure Pn by the surface wave probe 5. When transmitted through the contacting surface 1, the incident surface wave 2 gradually penetrates into the solid masses I and II as having been explained with reference to Figure 2, and it will have the energy attenuated correspondingly to the penetration. As the penetration and attenuation are repeated, the sound pressure is decreased from the initial value P0 thereof to P1, P1', P2, P2', P3, P3', ... and finally becomes Pn when it is receive by the surface wave probe 5. The transmitted surface wave 3 thus received is displayed as the echo pattern on the CRT 7 as shown in Figure 5. However, the position where the echo Pn appears is a one attained after a time T ($\ell$1 + t + $\ell$2) corresponding to the propagation distance ($\ell$1 + t + $\ell$2) from the incident point to the outgoing point of the surface wave.

As in the first embodiment having previously been described, the height hPn of the echo Pn increases and decreases correspondingly to the increase and decrease of the contact stress, and the preferable embodiment is about a half of the wave length $\lambda$ of the surface wave used.

The practical effect of this second embodiment has been proved by the experiment which will be described below. This will be described with reference to Figures 12 and 13. In Figure 12, the solid mass I is a crown-glass plate of p = 30 mm in length, t = 5 mm in thickness and 150 mm in width. The solid mass II is a rigid-rubber rectangular parallelopiped of q = 20 mm in length, r = 30 mm in thickness and 30 mm in width. The end face of the solid mass I is put in nearly perpendicular contact with the surface of the solid mass II and a load W is applied from the outer end face of the solid masses I and II by means of a spring tester. The surface wave probes 4 and 5 each of 5 MHz in frequency and having a transducer of 10 mm x 10 mm in dimensions are applied as opposing each other on either side of the solid mass I of t in thickness at a position of $\ell$1 = 20 mm from the contacting surface.

In this embodiment, the distance $\ell 1 = \ell 2$. While the above-mentioned load W applied by the spring tester being changed, the echo height hPn of the transmitted wave 3 under the sound pressure Pn for the contact stress $\sigma$ at the contacting surface 1 is determined by the method shown in Figure 11. The echo height thus determined is as indicated with the plotting of small spots in Figure 13. In this Figure, the contact stress $\sigma$ taken along the horizontal axis indicates the logarithmic value of the mean stress derived through the division of the load W by the height hPn of the echo Pn, while the vertical axis indicates the height hPn of the echo Pn in decibels. Also in this Figure, it is assumed that when the contact stress $\sigma$ is 0, the echo height is 0 decibel. Apparent from Figure 13, there exists a very close rectilinear correlation between the contact stress $\sigma$ and the height hPn of the echo Pn. The correlation factor $\gamma$ is 0.95. Using the least square method, the above-mentioned experimental results can be expressed as the following regression expression:

$$h_{P_n} = -17 \log \sigma - 54 \quad \cdots\cdots\cdots\cdots\cdots\cdots \quad (9)$$

And the experimental results can be shown as the straight line in Figure 13. Further, the expression (9) can be reformed as follows:

$$\sigma = 10^{\frac{-h_{P_n} + 54}{17}} \quad \cdots\cdots\cdots\cdots\cdots\cdots \quad (10)$$

As in the embodiment having previously been explained with reference to Figure 8, there is established a logarithmic rectilinear correlation between the contact stress $\sigma$ and the sound pressure Pn of the transmitted wave. By using the above-mentioned regression expression, the contact stress $\sigma$ can be determined very easily and quantitatively from the sound pressure Pn of the transmitted wave.

An example in which the regression expression determined through the above-mentioned experiment was applied to an actual product to measure the contact stress is shown in Figure 14. In this Figure, the reference numeral 8 indicates a window glass for automotive door, 9 a rubber-made weather stop to prevent rain water or the like from coming into the car, and 10 a retainer to fix the weather stop 9. This example is intended for measuring the contact stress at the contacting surface 1 between the end face of the window glass 8 and the weather stop 9. Both the surface wave transmitting and receiving probes 4 and 5 are of 5 MHz in frequency and have a transducer of 10 mm x 10 mm in dimensions. These probes are applied on either of the front and rear sides of the window glass 8. The incident surface wave 2 is transmitted through the contacting surface 1 and becomes a transmitted wave 3 which will be received by the surface wave receiving probe 5. The sound pressure of this transmitted wave is measured at the contacting surface 1 at various surrounding portions with the surface wave probes 4 and 5 being moved. A calculation is made with the measurement results applied in the expression (10). The results of this calculation are such that the contact stresses $\sigma$ at various parts are all nearly 0.5 kgf/mm$^2$.

It is proved that the measurement results well correspond to the designed values of the contact stress σ. Further they also well correspond to the results of the measurement using the pressure-sensitive sheet at the contacting surface 1, which have been previously described. Namely, it is proved that the method according to the present invention can accurate and quantitative evaluation of even the contact stress between any solid masses of different materials without being adversely affected by the configuration or the like of the contact surface.

In the second embodiment of the method according to the present invention, the contact surface is a flat or planer and the solid masses I and II are perpendicular to each other. Similarly to the first embodiment, the configuration of the contacting surface is not limited to the flat one, but it may be a circular surface, waved surface or a composite surface of flat and curved surfaces. Therefore, the solid masses I and II may not be perpendicular to each other. Also, in the above-discussed embodiment, the surfaces on which the surface wave transmitting and receiving probes are applied are the parallel surfaces of a flat glass plate; however, the surfaces may not be parallel and flat. Therefore, the one of the surfaces to which the probes are applied may be a flat one while the other is a curved one, or the surfaces may be a combination of curved surfaces. In the latter case, however, the distance $l_1$ from the incident point of the surface wave to the contacting surface and the propagation distance $l_2$ from

the contacting surface to the point where the surface wave is received by the surface wave probe are the ones along the surface along which the surface wave is propagated. Furthermore, even in case there is an irregularity on the non-contacting surface on which the surface wave is propagated, the measurement by the method according to the second embodiment is little influenced by the irregularity as in the first embodiment.

Further, the third embodiment of the method according to the principle shown in Figure 3 will be described herebelow with reference to Figure 15. In this Figure, th like numerals in Figures 3 and 4 indicate the like elements.

Figure 15 explains the method of measuring the contact stress by directing a surface wave from on the non-contacting surface in a plane in which also the contacting surfaces of the solid masses I and II exist toward the contacting surfaces and utilizing the surface wave transmitted again (reciprocally) through the contacting surfaces. In Figure 15, the reference numeral 4' indicates a surface wave transmitting/ receiving probe which is to be applied on the non-contacting surface of the solid mass I, which is an extension of the contacting surface 1. This probe is connected to an ultrasonic flaw detector 6 by means of a high frequency cable. A surface wave is directed under a sound pressure P0 from the surface wave probe 4' toward the contacting surface 1. As in the description of the first principle shown in FIgure 3, the the incident surface wave 2 is propagated on the non-contacting surface of the solid mass I and arrives at the beginning end (entry) In of the contact surface 1 of a length $\underline{t}$. The incident surface wave 2 having thus arrived at the entry is partially reflected there while the rest is propagated on the contacting surface 1 over a length of $\underline{t}$ and arrives at the trailing end (exit) Ou of the contacting surface 1. By the time when the surface wave has been transmitted, it gradually penetrates into the solid masses I and II while being attenuated. As the penetration and attenuation are repeated, the sound pressure of the surface wave is sequentially decreased from the initial value P0 thereof to P1, P1', P2, P2', P3, P3', ... The incident surface wave 2 having arrived at the trailing end Ou is partially transmitted through the trailing end and becomes the transmitted wave 3 under a sound pressure Pn'. It is gradually attenuated and finally disappears. The rest of the transmitted wave 3 is reflected at the trailing end Ou and becomes a reflected wave R under a sound pressure PR. The reflected wave R is propagated reversely on the contacting surface 1 over a length t and arrives at the beginning end In of the contacting surface. By the time when the reflected wave R has been retransmitted through the contacting surface 1, it penetrates into the solid masses I and II while being attenuated there. As this penetration and attenuation are repeatedly done, the sound pressure at the time of reflection is decreased from the initial value PR to PR1, PR', PR2, PR2', PR3, PR3', ... The reflected wave R is transmitted as it is through the beginning end In and becomes a retransmitted wave 3'. This wave 3' is received under a sound pressure Pm by the surface wave probe 4'. This received surface wave 3' is displayed as echo pattern on the CRT 7 of the ultrasonic flaw detector 6 as shown in Figure 5. In this case, however, the position where the echo Pm appears is a one after a time T ($l3 \times 2$) corresponding to a double of the propagation distance $l3$ from the incident point of the surface wave to the trailing end Ou of the contacting surface 1. Also the height of the echo Pm is increased or decreased due to the increase or decrease of the contact stress as in the first embodiment having previously been described; however, in this third embodiment, since the variation in height of the echo Pm is nearly a double of that in the first embodiment, the echo height changes very sharply in response to any slight change of the contact stress, which makes it possible to measure the contact stress very accurately. The preferable surface roughness is about a half of the wavelength of the surface wave used.

In the embodiment shown in Figure 15, the contacting surface is flat and the surface wave probe is applied to the non- contacting surface in a plane in which also the contacting surface exists. Similarly to the first embodiment having been previously discussed, the contacting surface and non-contacting surface including the surface on which the surface wave probe is applied may not exist in a same plane, and they may be a circumferential surface, waved surface or a composite surface of flat and curved surfaces. Also even in case there is any irregularity on the surface on which the surface wave is propagated, the measurement of contact stress is little influenced as in the first embodiment.

By any of the methods according to the embodiments on the principles shown in Figures 1 to 3, it is possible to continuously measure the distribution of contact stress at the contacting surfaces by displacing the surface wave probes. On the contrary, by fixing the surface wave probes using any adhesive, it is possible to continuously monitor when a dynamic contact stress acts on the contacting surfaces. By effecting this monitoring periodically, it is also possible to measure the variation of the contact stress with time lapse.

With the conventional techniques, the contact stress of thin materials abutting each other was difficult to measure with a high accuracy. But this contact stress can be accurately measured by the method using the ultrasound according to the present invention.

The methods according to the present invention having been described in the foregoing are to display the echo of transmitted wave on the CRT for visualization, and also according to the present invention, a conventionally used means can be used to convert into digital amounts the analogue amounts of an echo height and of a time length corresponding to the propagation distance of the surface wave during which the echo appears, the analogue amounts can be calculated using a formula correlated with the contact stress, and the values thus calculated can be displayed as digitized along with the contact stress. Furthermore, the above numerical values can be stored in a memory and compared with a reference value or threshold to effect a diagnosis for disorder or preventive diagnosis of any machine or to automatically inspect many products on the manufacturing line.

Also it is of course that the present invention is not limited to the above-mentioned embodiments alone, but can be embodied in various forms without departing from the spirit and scope of the present invention.

What is claimed is:

1. A method of measuring the contact stress at the contacting surface (1) of the abutting solid masses (I) and (II), comprising the following steps of:

directing a surface wave toward said contacting surface (1);

transmitting the surface wave through said contacting surface (1); and

measuring the contact stress taking the sound pressure of the transmitted wave (3) as index of evaluation.

2. A method according to Claim 1, wherein the surface **wave** is directed toward said contacting surface (1) from on one side of a non-contacting surface in a plane extending from said contacting surface (1), the surface wave is transmitted to the other side of the plane extending from said contacting surface (1), and the sound pressure of the transmitted wave (3) is taken as index of evaluation to measure the contact stress at the contacting surfaces.

3. A method according to Claim 2, wherein surface wave probes (4) and (5) are applied as opposite to each other on a non-contacting surface in a plane extending from said contacting surface (1) and with said contacting surface (1) being between said probes (4) and (5), a surface wave is directed from one (4) of said surface wave probes toward said contacting surface (1), the sound pressure of a transmitted wave (3) resulted from said surface wave having been transmitted through said contacting surface (1) is detected by the other surface wave probe (5), and the sound pressure thus deteted of said transmitted wave (3) is taken as index of evaluation to measure the contact stress at the contacting surface.

4. A method according to Claim 1, wherein a surface wave is directed toward said contacting surface (1) from one side of the non-contacting surface contiguous to said contacting surface and in a plane not extending from said contacting surface (1), the surface wave is transmitted to the other side of said non-contacting surface, and the sound pressur of the transmitted wave (3) is taken as index of evaluation to measure the contact stress at the contacting surface.

5. A method according to Claim 4, wherein a surface wave transmitting probe (4) is applied on a non-contacting surface on one side of a plane contiguous to the contacting surface (1) and not extending from said contacting surface (1), a surface wave receiving probe (5) is applied on said non-contacting surface on the other side in such a manner that the surface wave is propagted through said contacting surface (1), a surface wave is directed from said surface wave transmitting probe (4) toward said contacting surface (1), the sound pressure of the surface wave (3) having been transmitted

0229837

- 51 -

through said contacting surface (1) is detected by said surface wave receiving probe (5), and the sound pressure thus detected of the transmitted wave (3) is taken as index of evaluation to measure the contact stress at the contacting surface.

6. A method of measuring the contact stress at the contacting surface (1) between abutting solid masses (I) and (II), comprising the following steps of:

directing a surface wave toward said contacting surface (1);

transmitting the surface wave through said contacting surface (1);

passing through said contacting surface (1) the reflected wave (R) resulted from the reflection of the transmitted wave at the trailing end of said contacting surface (1); and

measuring the contact stress at the contacting surface taking the sound pressure of the retransmitted wave (3') as index of evaluation.

7. A method according to claim 6, wherein a surface wave transmitting/receiving probe (4') is applied on the non-contacting surface in a plane extending from said contacting surface (1), a surface wave is directed from said probe (4') toward said contacting surface (1), the surface wave is transmitted through said contacting surface (1), a reflected wave (R) resulted from the reflection of the transmitted wave at the trailing end of said contacting surface (1) is transmitted through said contacting surface (1) from an opposite direction to the direction of said incident wave, the sound pressure of the retransmitted wave (3') is detected by said probe (4'), and the sound pressure thus detected of the retransmitted wave (3') is taken as index of evaluation to measure the contact stress at the contacting surface.

0229837

1/14

FIG. 1

FIG. 2

FIG. 3

FIG. 4

FIG. 5

FIG. 6

FIG. 7

FIG. 8

$$h_{Pn} = -10.1 \log \sigma - 32.9$$

Echo height of sound pressure Pn ($h_{Pn}$) dB of transmitted wave

O : Experimental value

Contact stress ($\sigma$)  Kgf/mm²

0.001  0.005  0.01  0.05  0.1

5/14

0229837

FIG. 9(b)

FIG.9 (a)

FIG. 10

FIG. 11

FIG. 12

FIG. 13

Echo height of sound pressure ($h_{Pn}$) $P_n$ of transmitted wave — dB

$h_{Pn} = -17 \log \sigma - 54$

Contact stress $(\sigma)$ — $Kgf/_{mm^2}$

● : Experimental value

FIG. 14

FIG. 15

FIG. 16

I

II

N

C

FIG. 17

11

$t_1$

$t_2$

$\sigma$

$\sigma$

I

II

FIG. 18

Intensity of ultrasonic wave
reflected at contacting surfaces
$h (dB)$

0

−10

−20

0          10          20          30

Contact stress $(\sigma)$    $Kgf/mm^2$

0229837

FIG. 19

FIG. 20

FIG. 21

0229837

FIG. 22

FIG. 23

FIG. 24

FIG. 25

# INTERNATIONAL SEARCH REPORT

International Application No. PCT 0229837

## I. CLASSIFICATION OF SUBJECT MATTER (if several classification symbols apply, indicate all) 3

According to International Patent Classification (IPC) or to both National Classification and IPC

Int. Cl⁴ G01L 1/00

## II. FIELDS SEARCHED

| Minimum Documentation Searched 4 | |
|---|---|
| Classification System | Classification Symbols |
| IPC | G01L 1/00, 5/00 |

| Documentation Searched other than Minimum Documentation to the Extent that such Documents are Included in the Fields Searched 5 | |
|---|---|
| Jitsuyo Shinan Koho | 1926 – 1985 |
| Kokai Jitsuyo Shinan Koho | 1971 – 1985 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| A | JP, A, 50-123474 (Hitachi, Ltd.), 27 September 1975 (27. 09. 75), Page 2, upper left column, line 14 to upper right column, line 1 (Family : none) | 1 – 7 |
| A | JP, A, 53-121675 (Hitachi, Ltd.), 24 October 1978 (24. 10. 78), Page 2, upper right column, line 16 to lower left column, line 18 (Family : none) | 1 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| September 3, 1985 (03. 09. 85) | September 9, 1985 (09. 09. 85) |
| International Searching Authority 1 | Signature of Authorized Officer 20 |
| Japanese Patent Office | |

Form PCT-ISA/210 (second sheet) (October 1981)